# FASCICULE DE BREVET EUROPEEN

(11) **EP 0 930 404 B1**
(45) Date de publication et mention de la délivrance du brevet: **28.03.2001**
(21) Numéro de dépôt: 99440003.4
(22) Date de dépôt: 12.01.1999
(51) Int. Cl.: E04F 11/18, F16B 7/04

(54) **Elément de liaison et de couverture de joint et main courante ou analogue comportant au moins un tel élément**
Verbindungs- und Fugenabdeckungselement und Handlauf oder dergleichen mit mindestens einem solchen Element
Connecting and joint covering element and handrail or similar comprising at least one such element

(30) Priorité: 14.01.1998 FR 9800470
(43) Date de publication de la demande: 21.07.1999
(73) Titulaire: BURGER ET CIE (Société Anonyme), F-68160 Sainte-Marie-Aux-Mines (FR)
(72) Inventeur: Burger, Bertrand, 68230 Niedermorschwihr (FR)
(74) Mandataire: Nuss, Pierre

(56) Documents cités:
- BE-A- 427 022
- DE-C- 866 274
- US-A- 2 886 278
- US-A- 3 023 992
- US-A- 3 707 304
- US-A- 4 516 874

## Description

La présente invention concerne le domaine du bâtiment et de l'équipement des bâtiments, notamment les dispositifs de sécurité et de protection sous forme de structures allongées rapportées, par exemple, sur un mur de cage d'escalier ou de couloir, et a pour objets un élément de liaison et de couverture de joint, ainsi qu'une structure allongée telle que main courante, rampe, barre de protection ou analogue comprenant au moins un tel élément.

Les mains courantes, barres de protection murales ou analogues consistent généralement en une ou plusieurs parties allongées rapportées rigidement sur un mur ou un support plan analogue et disposées respectivement entre elles de manière à constituer une structure allongée continue ou non.

Pour réaliser une structure continue de grande longueur, il est généralement nécessaire, pour des raisons de solidité et de coût, d'assembler de manière contiguë plusieurs parties ou segments allongé(e)s, ce qui entraîne la constitution de zones de jointoiement inesthétiques et mécaniquement affaiblies, ainsi que la multiplication des points d'ancrage au mur ou support analogue.

Une difficulté supplémentaire survient lorsque les parties ou segments composant le corps de la main courante ou barre de protection sont réalisé(e)s en un matériau susceptible de se déformer à long terme et/ou sujet à des déformations induits par des agents extérieurs (eau, chaleur, froid, ...), tel que par exemple du bois ou un matériau "vivant" similaire.

Les problèmes précités n'ont pas trouvés à ce jour de solution satisfaisante simultanément du point de vue esthétique, du point de vue mécanique et du point de vue du prix de revient.

Par le document DE-C-866 274, on connaît un élément de liaison et de couverture de joint entre deux parties contiguës alignées d'une structure allongée, tel qu'une main courante, une rampe, une barre de protection ou analogue, notamment en bois, ledit élément étant constitué par un corps creux en forme de manchon pouvant entourer de manière ajustée les extrémités adjacentes ou voisines des deux parties concernées, ce manchon étant fendu longitudinalement et comportant des orifices de passage de moyens de fixation permettant de solidariser ledit élément à chaque extrémité de partie contiguë.

La présente invention a notamment pour but d'améliorer un élément du type précité en renforçant son engagement avec les parties contiguës à relier et en permettant sa coopération avec une platine de fixation.

Ce but est atteint, pour un élément de liaison et de couverture selon le préambule de la revendication 1, grâce aux caractéristiques mentionnées dans la partie caractérisante de cette revendication.

La présente invention a également pour objet une structure allongée telle que définie dans la revendication 4.

L'invention sera mieux comprise, grâce à la description ci-après, qui se rapporte à différentes variantes de réalisation préférées, données à titre d'exemples non limitatifs, et expliquées avec référence aux dessins schématiques annexés, dans lesquels :
les figures 1A, 1B et 1C sont respectivement des vues en coupe transversale, de dessous et en coupe selon A-A d'un élément de liaison et de couverture de joint selon une première variante de réalisation de l'invention ;
les figures 2A et 2B sont respectivement des vues en coupe transversale et de dessous d'un élément de liaison et de couverture de joint selon une seconde variante de réalisation de l'invention ;
les figures 3A et 3B sont respectivement des vues en coupe transversale et de dessous d'un élément de liaison et de couverture de joint selon une troisième variante de réalisation de l'invention ;
les figures 4A, 4B, 4C, 4D et 4E sont respectivement des vues en élévation frontale, de dessus, en élévation latérale, en coupe selon B-B et en coupe selon C-C, d'une platine de fixation conforme à l'invention ;
les figures 5A, 5B, 5C et 5D sont des vues en perspective illustrant les différentes phases de montage d'une platine de fixation selon l'invention et d'un élément de liaison, tel que représenté sur la figure 1, pour former une main courante, et,
les figures 6A et 6B sont des vues en perspective illustrant les phases de montage d'un élément de liaison tel que représenté sur la figure 3.

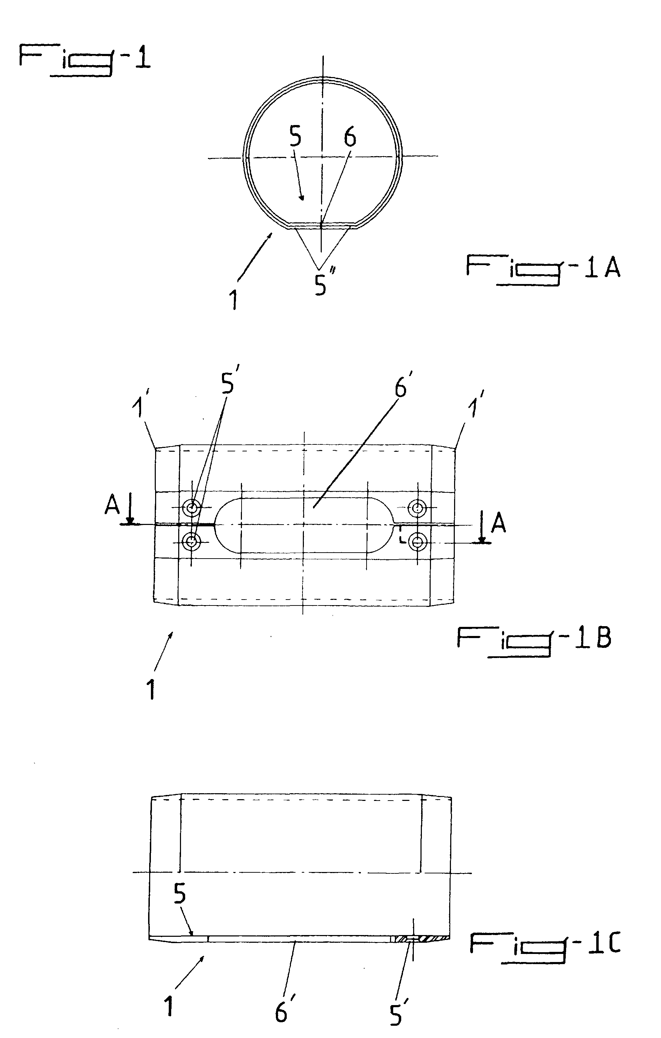

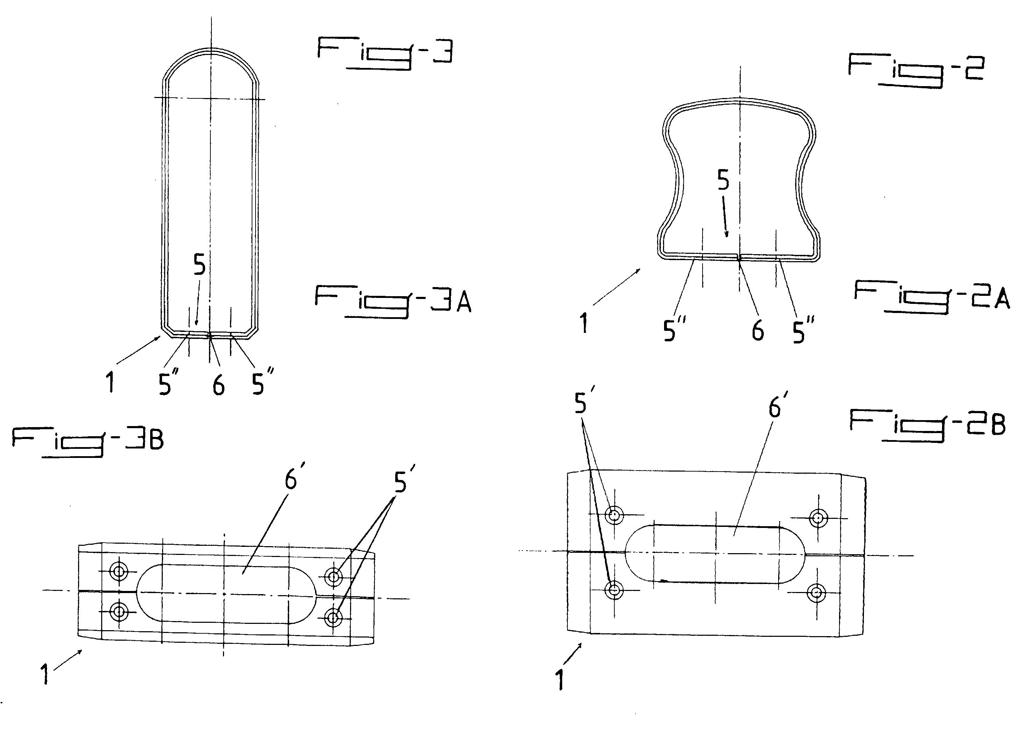

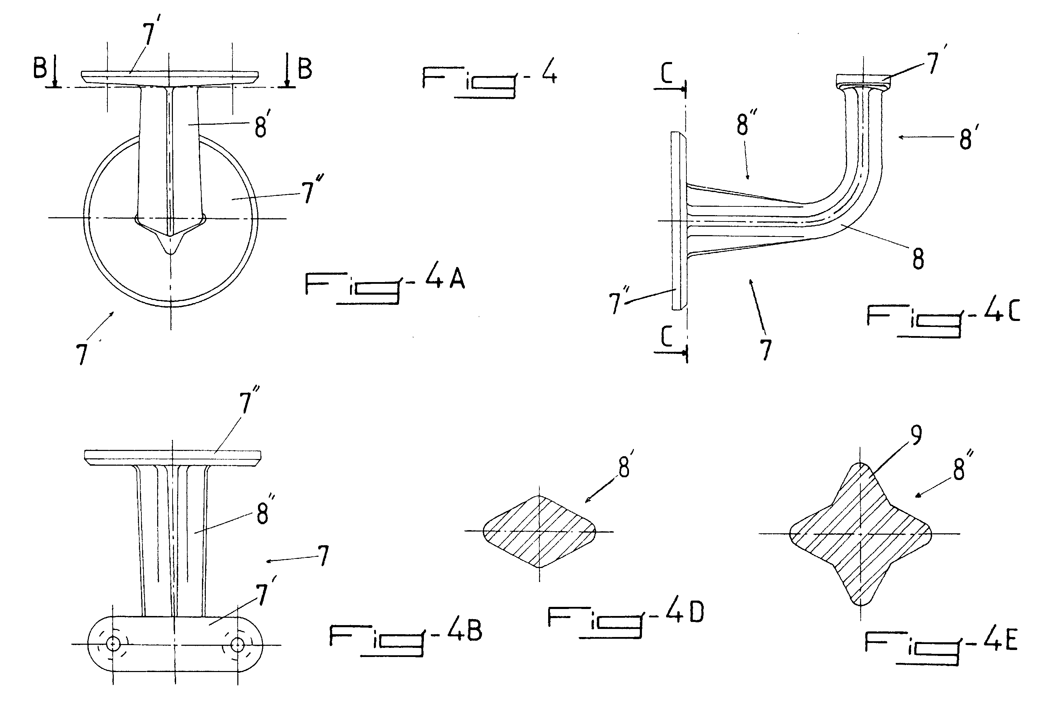

Comme le montrent les figures 1, 2, 3, 5 et 6, l'élément de liaison et de couverture de joint 1 est principalement constitué par un corps creux en forme de manchon 1 pouvant entourer de manière ajustée les extrémités adjacentes ou voisines 4, 4' des deux parties 2, 2' concernées, ce manchon 1 étant fendu longitudinalement, comportant une portion de paroi plane 5 longitudinale pourvue d'une découpe 6' pour la réception par emboîtement au moins partiel d'une plaquette d'assujettissement 7' d'une platine de fixation 7, et comportant des orifices 5' de passage de moyens de fixation permettant de solidariser ledit élément I à chaque extrémité 4', 4' de partie contiguë 2, 2'.

L'élément I permet par conséquent de couvrir entièrement la zone de transition entre deux parties 2 et 2' contiguës (et donc, si les deux parties 2 et 2' ont des aspects similaires, de donner l'illusion d'une structuré continue) et de relier rigidement les deux parties 2 et 2' entre elles par chemisage de leurs extrémités 4, 4', tout en pouvant s'adapter au moins dans une certaine mesure aux éventuelles déformations desdites deux parties 2 et 2' reliées entre elles, ainsi qu'à leurs éventuels mouvements relatifs (du fait de la discontinuité structurelle introduite par la fente 6).

Afin de renforcer les propriétés précitées, et notamment aussi conférer à la main libre 1 ou analogue une surface externe dépourvue de discontinuité et/ou de décrochement sensible au toucher et assurer un blocage en rotation et une fixation solide au manchon 1 sur les parties 2, 2'; ledit manchon 1 présente une paroi de faible épaisseur en un matériau rigide, élastique et résilient, tel que par exemple du polyamide ou un matériau synthétique analogue, dont les deux bords opposés latéraux 1' sont chanfreinés, ledit manchon 1 comportant une portion de paroi plane 5 longitudinale scindée en deux demi-portions 5" par la fente 6 traversante longitudinale et chacune desdites demi-portions 5" étant solidarisée à chaque extrémité 4, 4' de chacune des parties contiguës 2, 2'.

Les propriétés du matériau utilisé et la structure en manchon fendu autorisent également un montage par enclenchement élastique de l'élément 1 sur la main courante ou analogue 3 (en écartant les deux bords de la fente), évitant ainsi un enfilement fastidieux.

Selon une caractéristique de l'invention, représentée aux figures 1B, 2B et 3B des dessins annexés, l'élément 1 peut être pourvu, au niveau de la portion de paroi plane 5, d'une découpe 6' pour la réception par emboîtement au moins partiel d'une plaquette d'assujettissement 7' d'une platine de fixation 7, ladite découpe 6' étant traversée par la fente 6 séparant les deux demi-portions de paroi plane 5".

Ainsi, la platine de fixation 7 est, d'une part, solidarisée au moyen de vis ou d'éléments de fixation analogues aux deux extrémités contiguës 4, 4' de parties adjacentes 2, 2' et, d'autre part, maintenue et bloquée par conjugaison de formes dans le manchon 1, d'où il résulte un montage extrêmement rigide et résistant.

L'ensemble élément de liaison et de couverture de joint 1/platine de fixation 7 permet par conséquent de réaliser une fixation à la fois esthétique et résistante (du fait notamment de la fixation de chacun de ces éléments sur les parties adjacentes formant la structure allongée), et de fournir une structure allongée formée par juxtaposition de parties discontinues présentant une rigidité similaire à celle d'une structure allongée réalisée d'un seul tenant.

La présente invention a également pour objet une structure telle qu'une main courante, une barre ou rampe de protection ou analogue constituée par plusieurs parties contiguës alignées, caractérisée en ce que les extrémités adjacentes 4, 4' de deux parties contiguës 2, 2' sont entourées et reliées entre elles par des éléments de liaison et de couverture 1 tels que décrits ci-dessus et en ce que lesdites parties contiguës 2, 2' sont fixées rigidement au mur ou support analogue concerné au moyen de platines de fixation 7 réparties le long de ladite structure 3.

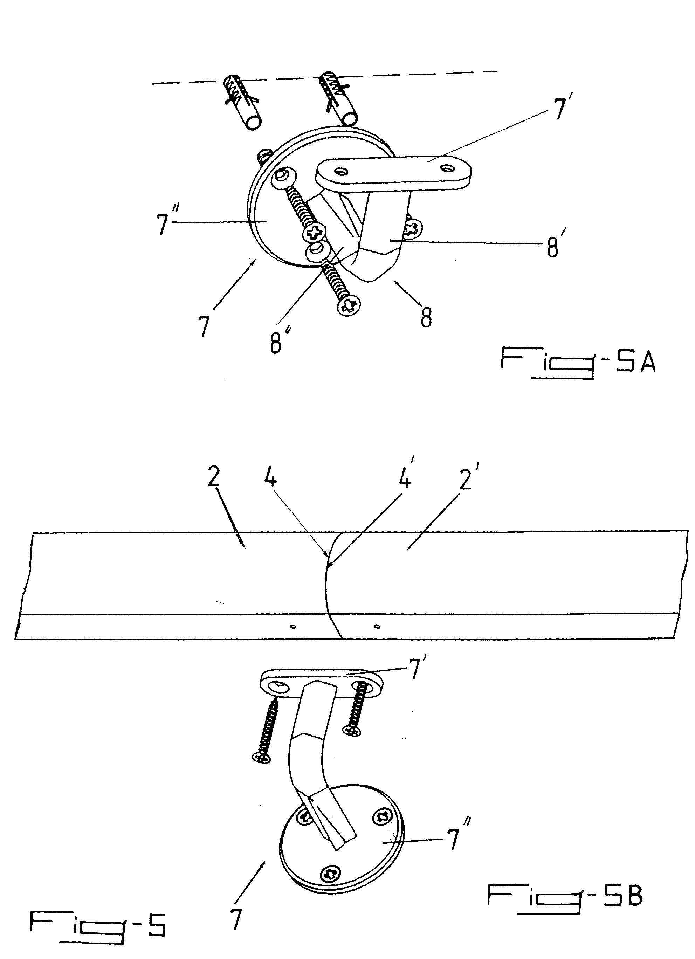

Comme le montrent les figures 4, 5 et 6 des dessins annexés, les platines de fixation 7 consistent chacune en une branche coudée 8 munie à une de ses extrémités d'une plaquette 7" d'assujettissement au mur ou support analogue et à son autre extrémité d'une plaquette 7' d'assujettissement à deux parties contiguës 2, 2', en étant emboîtée avec conjugaison de forme dans une découpe 6' correspondante ménagée dans une portion de surface plane 5 de l'élément de liaison et de couverture I recouvrant les extrémités 4, 4' attenantes des deux parties contiguës concernées 2, 2'.

Conformément à une caractéristique de l'invention, représentée aux figures 4B, 4C et 4D des dessins annexés, les plaquettes d'assujettissement 7' aux parties contiguës 2, 2' présentent une forme oblongue orientée avec sa plus grande longueur dans la direction longitudinale de la structure 3 et la branche coudée 8 présente une section transversale en forme de losange dont la grande diagonale est orientée dans la direction longitudinale de la main courante ou analogue 3 et est composée de deux segments rectilignes 8', 8" formant entre eux un angle sensiblement droit.

Afin d'augmenter la résistance à la flexion des platines de fixation 7, il peut être prévu que la branche coudée 8 comporte, au niveau de son segment 8" solidaire de la plaquette 7" d'assujettissement au mur ou support analogue, des nervures de renforcement 9 au niveau des arêtes opposées reliées entre elles, en coupe, par la petite diagonale.

L'homme du métier comprendra que les parties 2, 2' et le manchon 1 peuvent être formés de différents matériaux et présenter différentes formes.

Toutefois, conformément à un mode de réalisation préférentiel, les parties alignées contiguës 2, 2' consistent en du bois, traité ou non, et présentent, en coupe transversale, une forme arrondie, circulaire, en Ω, rectangulaire, carrée ou autre, en étant munies d'un méplat longitudinal dont la largeur est identique à celle de la portion de surface plane 5 de l'élément de liaison et de couverture 1.

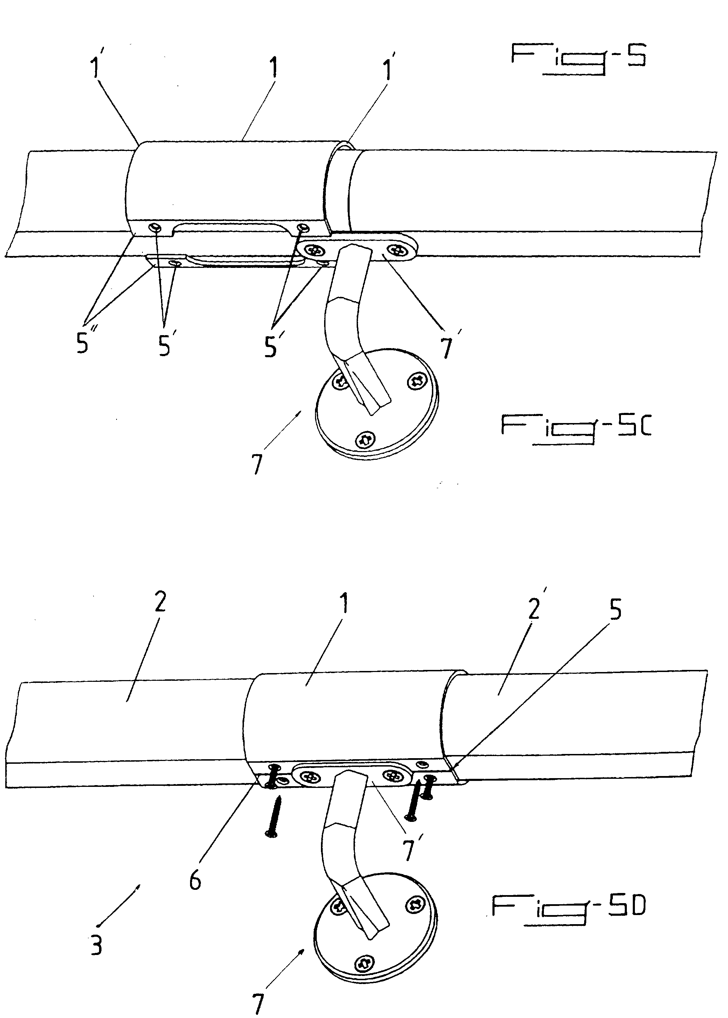

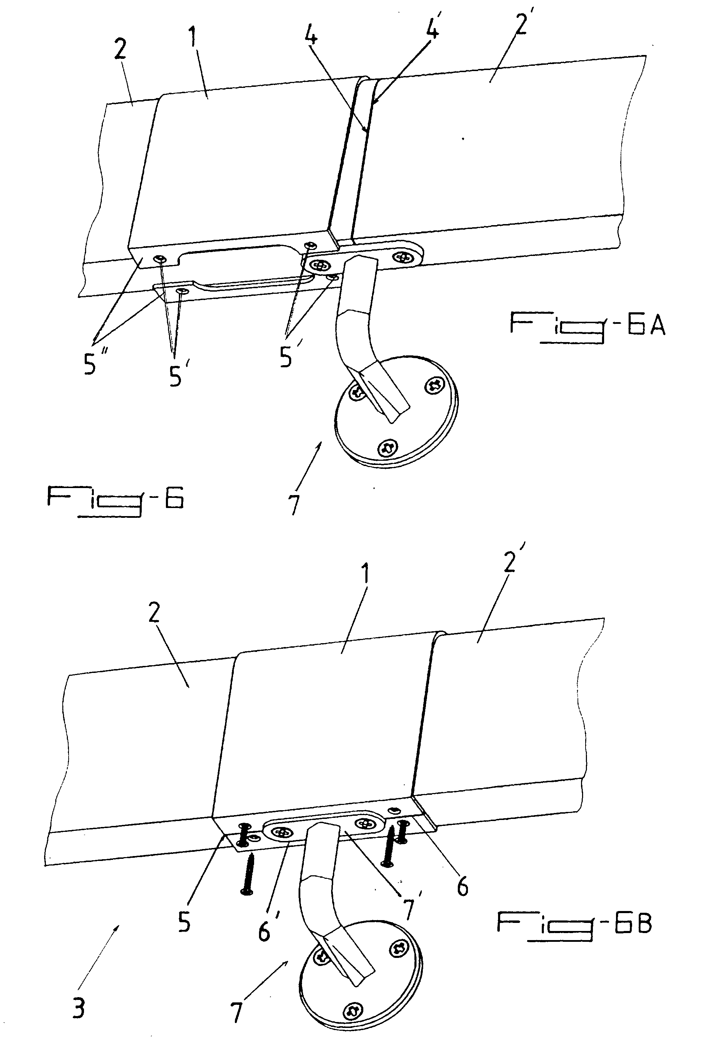

Comme le montrent les figures 5 et 6 des dessins annexés, la liaison entre deux parties 2 et 2' contiguës considérées pourra être assurée non seulement par l'élément de liaison 1, mais également par la plaquette 7' de la platine de fixation 7, qui chevauchera alors avantageusement la zone de jonction entre les portions d'extrémité 4 et 4' considérées.

## Revendications

1. Elément (1) de liaison et de couverture de joint entre deux parties contiguës alignées d'une structure allongée telle qu'une main courante, une rampe, une barre de protection ou analogue, notamment en bois, ledit élément (1) étant constitué par un corps creux en forme de manchon (1) pouvant entourer de manière ajustée les extrémités adjacentes ou voisines (4, 4') des deux parties (2, 2') concernées, ce manchon (1) étant fendu longitudinalement et comportant des orifices (5') de passage de moyens de fixation permettant de solidariser ledit élément (1) à chaque extrémité (4, 4') de partie contiguë (2, 2') caractérisé en ce que ledit manchon (1) comporte une portion de paroi plane (5) longitudinale pourvue d'une découpe (6') pour la réception par emboîtement au moins partiel d'une plaquette d'assujettissement (7') d'une platine de fixation (7).

2. Elément (1) selon la revendication 1, caractérisé en ce que le manchon (1) présente une paroi de faible épaisseur en un matériau rigide, élastique et résilient, tel que par exemple du polyamide, dont les deux bords opposés latéraux (1') sont chanfreinés, ladite portion de paroi plane (5) étant scindée en deux demi-portions (5") par la fente (6) traversante longitudinale et chacune desdites demi-portions (5") étant destinée à être solidarisée à chaque extrémité (4, 4') de chacune des parties contiguës (2, 2').

3. Elément selon la revendication 2, caractérisé en ce que la découpe (6') est traversée par la fente (6) séparant les deux demi-portions de paroi plane (5").

4. Structure allongée (3) telle que main courante, rampe, barre de protection ou analogue constituée par plusieurs parties contiguës (2, 2') alignées, caractérisée en ce que les extrémités adjacentes (4, 4') de deux parties contiguës (2, 2') sont entourées et reliées entre elles par un élément de liaison et de couverture (1) selon l'une quelconque des revendications 1 à 3 et en ce que lesdites parties contiguës (2, 2') sont fixées rigidement au mur ou support analogue concerné au moyen de platines de fixation (7) réparties le long de ladite structure (3).

5. Structure selon la revendication 4, caractérisée en ce que les platines de fixation (7) consistent chacune en une branche coudée (8) munie à une de ses extrémités d'une plaquette (7") d'assujettissement au mur ou support analogue et à son autre extrémité d'une plaquette (7') d'assujettissement à deux parties contiguës (2, 2'), en étant emboîtée avec conjugaison de forme dans une découpe (6') correspondante ménagée dans une portion de surface plane (5) de l'élément de liaison et de couverture (1) recouvrant les extrémités (4, 4') attenantes des deux parties contiguës concernées (2, 2').

6. Structure selon la revendication 5, caractérisée en ce que les plaquettes d'assujettissement (7') aux parties contiguës (2, 2') présentent une forme oblongue orientée avec sa plus grande longueur dans la direction longitudinale de la structure (3) et en ce que la branche coudée (8) présente une section transversale en forme de losange dont la grande diagonale est orientée dans la direction longitudinale de la main courante ou analogue (3) et est composée de deux segments rectilignes (8', 8") formant entre eux un angle sensiblement droit.

7. Structure selon la revendication 6, caractérisée en ce que la branche coudée (8) comporte, au niveau de son segment (8") solidaire de la plaquette (7") d'assujettissement au mur ou support analogue, des nervures de renforcement (9) au niveau des arêtes opposées reliées entre elles, en coupe, par la petite diagonale.

8. Structure selon l'une quelconque des revendications 5 à 7, caractérisée en ce que les parties alignées contiguës (2, 2') consistent en du bois, traité ou non, et présentent, en coupe transversale, une forme arrondie, circulaire, en Ω, rectangulaire, carrée ou autre, en étant munies d'un méplat longitudinal dont la largeur est identique à celle de la portion de surface plane (5) de l'élément de liaison et de couverture (1).

## Patentansprüche

1. Element (1) zur Verbindung und Abdeckung einer Fuge zwischen zwei kontinuierlich ausgerichteten Teilen einer länglichen Struktur, wie einem Handlauf, einem Treppengeländer, einem Schutzbalken oder dergleichen, insbesondere aus Holz, wobei das Element (1) aus einem Hohlkörper in Form einer Hülse (1) gebildet ist, welche die angrenzenden oder benachbarten Enden (4,4') der betreffenden beiden Teile (2,2') in angepaßter Weise umgeben kann, wobei die Hülse (1) längs geschlitzt ist und Öffnungen (5') für den Durchgang von Befestigungselementen umfaßt, die ein festes Verbinden des Elements (1) mit jedem Ende (4,4') des kontinuierlichen Teils (2,2') erlauben, dadurch gekennzeichnet, daß die Hülse (1) einen in Längsrichtung ebenen Wandabschnitt (5) umfaßt, der mit einer Ausnehmung (6') für die wenigstens teilweise Aufnahme einer Verbindungsscheibe (7') einer Befestigungsplatte (7) versehen ist.

2. Element (1) nach Anspruch 1, dadurch gekennzeichnet, daß die Hülse (1) eine Wand von geringer Stärke aus einem steifen, elastischen und nachgiebigen Material umfaßt, wie beispielsweise Polyamid, deren zwei seitlich entgegengesetzt liegende Ränder (1') abgeschrägt sind, wobei der ebene Wandabschnitt (5) durch den längs verlaufenden Schlitz (6) in zwei Halbabschnitte (5,,) gespalten ist und jeder der Halbabschnitte (5,,) dazu bestimmt ist, mit jedem Ende (4,4') jedes der kontinuierlichen Teile (2,2') fest verbunden zu werden.

3. Element nach Anspruch 2, dadurch gekennzeichnet, daß die Ausnehmung (6') von dem Schlitz (6), der die zwei Halbabschnitte (5,,) der ebenen Wand trennt, durchlaufen wird.

4. Längliche Struktur (3), wie ein Handlauf, ein Treppengeländer, ein Schutzbalken oder dergleichen, die durch mehrere kontinuierlich ausgerichtete Teile (2,2') gebildet wird, dadurch gekennzeichnet, daß die aneinander angrenzenden Enden (4, 4') von zwei kontinuierlichen Teilen (2,2') durch ein Element zur Verbindung und Abdeckung (1) gemäß einem der Ansprüche 1 bis 3 umgeben und durch dieses miteinander verbunden sind, und dadurch, daß die kontinuierlichen Teile (2,2') mit Hilfe der Befestigungsplatten (7), die entlang der Struktur (3) verteilt sind, an einer Mauer oder ähnlichen Abstützung starr befestigt sind.

5. Struktur nach Anspruch 4, dadurch gekennzeichnet, daß die Befestigungsplatten (7) jeweils aus einem gekrümmten Arm (8) bestehen, der versehen ist an einem seiner Enden mit einer Scheibe (7,,) zur festen Verbindung an einer Mauer oder an einer analogen Abstützung und an seinem anderen Ende mit einer Scheibe (7') zur Verbindung mit zwei kontinuierlichen Teilen (2,2'), wobei diese formschlüssig in eine entsprechende Ausnehmung (6') eingesetzt ist, welche in einem Abschnitt der ebenen Oberfläche (5) des Elements zur Verbindung und Abdeckung (1) ausgebildet ist, das die aneinander angrenzenden Enden (4,4') der zwei betreffenden kontinuierlichen Teile (2,2') überdeckt.

6. Struktur nach Anspruch 5, dadurch gekennzeichnet, daß die Scheiben (7') zur festen Verbindung mit den kontinuierlichen Teilen (2,2') eine längliche Form aufweisen, die mit ihrer größeren Länge in Längsrichtung der Struktur (3) ausgerichtet ist, und daß der gekrümmte Arm (8) einen rautenförmigen Querschnitt aufweist, dessen große Diagonale in der Längsrichtung des Handlaufs (3) oder dergleichen ausgerichtet ist und aus zwei geraden Abschnitten (8', 8,,) zusunmengesetzt ist, die untereinander einen im wesentlichen rechten Winkel bilden.

7. Struktur nach Anspruch 6, dadurch gekennzeichnet, daß der gekrümmte Arm (8) an seinem mit der Scheibe (7,,) zur festen Verbindung an einer Mauer oder einer ähnlichen Abstützung fest verbundenen Abschnitt (8,,) an gegenüber liegenden Kanten, die im Schnitt untereinander durch die kleine Diagonale verbunden sind, Verstärkungsdppen (9) aufweist.

8. Struktur nach einem der Ansprüche 5 bis 7, dadurch gekennzeichnet, daß die kontinuierlich ausgerichteten Teile (2,2,,) aus behandeltem oder unbehandeltem Holz bestehen und im Querschnitt eine abgerundete, kreisförmige, Ω-förmige, rechtwinklige, viereckige oder andere Form aufweisen, derart, daß sie mit einer längs verlaufenden Abflachung versehen sind, deren Größe identisch derjenigen des ebenen Oberflächenabschnitts (5) des Elements zur Verbindung und Abdeckung (1) ist.

## Claims

1. Connecting and covering element (1) for a joint between two aligned contiguous parts of an elongated structure such as a hand rail, a balustrade, a guard rail or the like, particularly made from wood, the said element (1) consisting of a hollow body in the form of a sleeve (1) which can surround the adjacent or neighbouring ends (4,4') of the two parts (2,2') concerned in a fitted manner, this sleeve (1) being slotted longitudinally and having openings (5') for the passage of fixing means permitting the said element (1) to be joined to each end (4,4') of contiguous parts (2,2'), characterised in that the said sleeve (1) has a longitudinal planar wall portion (5) which is provided with a cut-out (6') to receive a securing pad (7') of a fixing plate (7) by at least partial interlocking.

2. Element (1) as claimed in Claim 1, characterised in that the sleeve (1) has a wall of small thickness made from a rigid, elastic and resilient material, such as for example polyamide, the two opposed lateral edges (1') of which are chamfered, the said planar wall portion (5) being divided into two half-portions (5") by the longitudinal through slot (6) and each of the said half-portions (5") being intended to be joined to each end (4,4') of each of the contiguous parts (2, 2').

3. Element as claimed in Claim 2, characterised in that the slot (6) separating the two half-portions of planar wall (5") passes through the cut-out (6').

4. Elongated structure (3) such as a hand rail, a balustrade, a guard rail or the like formed by a plurality of aligned contiguous parts (2,2'), characterised in that the adjacent ends (4, 4') of two contiguous parts (2, 2') are surrounded and connected to one another by a connecting and covering element (1) as claimed in any one of Claims 1 to 3 and in that the said contiguous parts (2, 2') are fixed rigidly to tile wall or similar support concerned by means of fixing plates (7) distributed along the said structure.

5. Structure as claimed in Claim 4, characterised in that the fixing plates (7) each consist of a bent arm (8) provided at one of its ends with a pad (7") for securing to the wall or similar support and at its other end with a pad (7') for securing to two contiguous parts (2, 2'), being fitted with mating of shapes in a corresponding cut-out (6') provided in a portion of planar surface (5) of the connecting and covering element (1) covering the adjoining ends (4, 4') of the two contiguous parts (2, 2') concerned.

6. Structure as claimed in Claim 5, characterised in that the pads (7') for securing to the contiguous parts (2, 2') have an oblong shape oriented with its greater length in the longitudinal direction of the structure (3) and in that the bent arm (8) has a diamond-shaped cross-section of which the large diagonal is oriented in the longitudinal direction of the hand rail or the like (3) and is composed of two rectilinear segments (8', 8") forming a substantially right angle between them.

7. Structure as claimed in Claim 6, characterised in that the bent arm (8) has, at the level of its segment (8") which is joined to the pad (7") for securing to the wall or similar support, reinforcing ribs (9) at the level of the opposing ridges which are connected to one another, in section, by the small diagonal.

8. Structure as claimed in any one Claims 5 to 7, characterised in that the contiguous aligned parts (2, 2') are made from wood, treated or untreated, and have a rounded, circular, Ω-shaped, rectangular, square or other cross-section, being provided with a longitudinal flat part of which the width is identical to that of the portion of planar surface (5) of the connecting and covering element (1).
